(19) Europäisches Patentamt
European Patent Office
Office européen des brevets

(11) **EP 4 310 536 A1**

(12) **EUROPEAN PATENT APPLICATION**
published in accordance with Art. 153(4) EPC

(43) Date of publication:
**24.01.2024 Bulletin 2024/04**

(21) Application number: **22774089.1**

(22) Date of filing: **15.03.2022**

(51) International Patent Classification (IPC):
**G01S 7/48** (2006.01)          **G01S 17/931** (2020.01)
**G01S 17/42** (2006.01)

(52) Cooperative Patent Classification (CPC):
**G01S 7/48; G01S 17/42; G01S 17/931**

(86) International application number:
**PCT/CN2022/080930**

(87) International publication number:
**WO 2022/199428 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021 CN 202110315559**

(71) Applicant: **Huawei Technologies Co., Ltd.
Longgang
Shenzhen, Guangdong 518129 (CN)**

(72) Inventors:
• **HAN, Erjiang
  Shenzhen, Guangdong 518129 (CN)**
• **SHI, Xianling
  Shenzhen, Guangdong 518129 (CN)**
• **CAO, Guoliang
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SIGNAL RECEIVING DEVICE, DETECTING DEVICE, AND SIGNAL PROCESSING METHOD AND DEVICE**

(57)    This application is applied to the autonomous driving field, and provides a signal receiving apparatus, a detection apparatus, and a signal processing method and apparatus. The receiving apparatus includes a first receiving branch; the first receiving branch includes a first detector and a signal coupling apparatus; the first detector is configured to output one branch of echo electrical signal; the signal coupling apparatus outputs at least two branches of echo electrical signals based on the branch of echo electrical signal output by the first detector; and one branch of echo electrical signal in the at least two branches of echo electrical signals has same signal strength as the branch of echo electrical signal output by the first detector. The signal coupling apparatus adds one branch of or more branches of echo electrical signals without changing the branch of echo electrical signal output by the first detector. This improves accuracy of signal processing. Compared with using only one branch of echo signal, this enlarges a dynamic detection range. The method may be applied to the Internet of Vehicles, for example, vehicle-to-everything V2X, long term evolution-vehicle LTE-V, and vehicle-to-vehicle V2V.

FIG. 2

**Description**

**CROSS-REFERENCE TO RELATED APPLICATIONS**

This application claims priority to Chinese Patent Application No. 202110315559.3, filed with the China National Intellectual Property Administration on March 24, 2021 and entitled "SIGNAL RECEIVING APPARATUS, DETECTION APPARATUS, AND SIGNAL PROCESSING METHOD AND APPARATUS", which is incorporated herein by reference in its entirety.

**TECHNICAL FIELD**

Embodiments of this application relate to the fields of autonomous driving and the Internet of Vehicles, and in particular, to a signal receiving apparatus, a detection apparatus, and a signal processing method and apparatus.

**BACKGROUND**

A lidar (light detection and ranging, LiDAR) is a radar system that detects a feature quantity, for example, a location and a speed of a target object, by emitting a laser beam. A working principle of the lidar is to transmit a sounding signal (a laser beam) to a target object (for example, a vehicle, a road sign, or a vehicle license plate), and then compare a received signal (an echo signal) reflected from the target object with the transmitted signal and process the received signal, to obtain information about the target object, for example, a reflectivity, a distance, an orientation, a height, a speed, a posture, even a shape, or another parameter of the target object, to detect, track, and identify the target object.
When the target object is very close to the lidar or the reflectivity of the target object is very high, an echo signal may be saturated and distorted. When the target object is very far from the lidar or the reflectivity of the target object is very low, a signal-to-noise ratio of the echo signal may be very low or even the echo signal may not be detected. With popularization of an automated driving system (automated driving system, ADS), application of lidar becomes increasingly popular. The ADS has a high requirement for a dynamic detection range of the lidar. The dynamic detection range herein refers to a range of a parameter that affects signal strength of an echo signal, for example, a distance range and a reflectivity range.
Based on this, how to improve a dynamic detection range of a lidar is a technical problem that needs to be resolved.

**SUMMARY**

Embodiments of this application provide a signal receiving apparatus, a detection apparatus, and a signal processing method and apparatus, to improve a dynamic detection range.
According to a first aspect, a signal receiving apparatus is provided, including a first receiving branch; the first receiving branch includes a first detector and a signal coupling apparatus; the first detector is configured to output one branch of echo electrical signal; the signal coupling apparatus outputs at least two branches of echo electrical signals based on the branch of echo electrical signal output by the first detector; and one branch of echo electrical signal in the at least two branches of echo electrical signals has same signal strength as the branch of echo electrical signal output by the first detector.
In the first aspect, the signal coupling apparatus is disposed to output the at least two branches of echo electrical signals, where signal strength (signal strength, for example, a voltage value) of one echo electrical signal in the at least two branches of echo electrical signals is the same as that of the branch of echo electrical signal output by the first detector, that is, the signal coupling apparatus further adds one branch of or more branches of other echo electrical signals without changing the branch of echo electrical signal output by the first detector. In this way, one branch of or more branches of appropriate echo electrical signals may be selected from a plurality of branches of echo electrical signals based on an actual situation to perform signal processing, thereby improving accuracy of signal processing. For example, when a measured target object is close or a reflectivity of the target object is very high, to avoid signal saturation distortion, an echo electrical signal whose signal is not distorted or whose signal strength is low may be selected for signal processing. For another example, when a measured target object is far away or a reflectivity of the target object is very low, to avoid an excessively low signal-to-noise ratio of the echo signal, an echo electrical signal with high signal strength or a plurality of branches of echo electrical signals may be selected for superposition, to perform signal processing. Compared with signal processing performed by using only the branch of echo electrical signal output by the first detector, in a case in which same accuracy is ensured, this allows detection of a target object that is farther and closer and has a higher or lower reflectivity, thereby increasing a dynamic detection range.
In a possible implementation, the signal receiving apparatus may further include at least one second receiving branch. The second receiving branch includes a light guiding apparatus and a second detector; the light guiding apparatus is configured to input an echo optical signal to the second detector; and the second detector is configured to output one branch of echo electrical signal based on the echo optical signal.

The light guiding apparatus is disposed to collect an echo optical signal that is weak compared with an echo optical signal collected by the first detector on a main branch, which avoids signal saturation distortion, so that short-distance measurement or high reflectivity measurement can be more accurate, and a dynamic detection range is further improved.

According to a second aspect, a signal receiving apparatus is provided, including: a first receiving branch and at least one second receiving branch, where the first receiving branch includes a first detector; the first detector is configured to output one branch of echo electrical signal; the second receiving branch includes a light guiding apparatus and a second detector; the light guiding apparatus is configured to input an echo optical signal to the second detector; and the second detector is configured to output one branch of echo electrical signal based on the echo optical signal.

In the second aspect, the light guiding apparatus is disposed to collect an echo optical signal that is weak compared with the echo optical signal collected by the first detector on a main branch, which avoids signal saturation distortion, so that short-distance measurement or high reflectivity measurement can be more accurate, and a dynamic detection range is further improved.

In a possible implementation, the first receiving branch may further include a signal coupling apparatus, where the signal coupling apparatus is configured to output at least two branches of echo electrical signals based on the branch of echo electrical signal output by the first detector, where one branch of echo electrical signal in the at least two branches of echo electrical signals has same signal strength as the branch of echo electrical signal output by the first detector.

In the foregoing possible implementation, the signal coupling apparatus is disposed to output the at least two branches of echo electrical signals, where signal strength (signal strength, for example, a voltage value) of one echo electrical signal in the at least two branches of echo electrical signals is the same as that of the branch of echo electrical signal output by the first detector, that is, the signal coupling apparatus further adds one branch of or more branches of other echo electrical signals without changing the branch of echo electrical signal output by the first detector. In this way, one branch of or more branches of appropriate echo electrical signals may be selected from a plurality of branches of echo electrical signals based on an actual situation to perform signal processing, thereby improving accuracy of signal processing. For example, when a measured target object is close or a reflectivity of the target object is very high, to avoid signal saturation distortion, an echo electrical signal whose signal is not distorted or whose signal strength is low may be selected for signal processing. For another example, when a measured target object is far away or a reflectivity of the target object is very low, to avoid an excessively low signal-to-noise ratio of the echo signal, an echo electrical signal with high signal strength or a plurality of branches of echo electrical signals may be selected for superposition, to perform signal processing. Compared with signal processing performed by using only the branch of echo electrical signal output by the first detector, in a case in which same accuracy is ensured, this allows detection of a target object that is farther and closer and has a higher or lower reflectivity, thereby increasing a dynamic detection range.

A plurality of possible implementations described below may be applicable to the first aspect and may also be applicable to the second aspect.

In a possible implementation, a light inlet of the light guiding apparatus is located in a receiving field of view of the first detector.

The light guiding apparatus samples a part of optical signals from echo optical signals on a main optical path where the first detector is located for signal processing. Because signal strength of the sampled part of optical signals is weak, saturation distortion can be avoided, so that short-distance measurement or high reflectivity measurement is more accurate, and a dynamic detection range is further improved.

In a possible implementation, the light guiding apparatus includes a light pillar.

An optical signal is transmitted through the light pillar, so that a loss of the optical signal can be reduced.

In a possible implementation, a light inlet of the light pillar is a 45° inclined surface, so that more echo optical signals enter the light pillar.

In a possible implementation, the light guiding apparatus further includes a box, the light inlet of the light pillar is located in the box; and a light inlet is disposed on the box, and the echo optical signal enters the light inlet of the light pillar through the light inlet of the box.

The box is disposed at the inlet of the light pillar, so that stray light is prevented from entering the light pillar, thereby reducing impact of noise on signal processing.

In a possible implementation, a first lens group is disposed on the light inlet of the box, and the first lens group is configured to converge an echo optical signal at the light inlet of the light pillar.

A lens group is disposed to converge light, so that more optical signals enter a light pillar, thereby improving accuracy of signal processing.

In a possible implementation, an inner wall of the box can reflect an optical signal, and the echo optical signal that enters the light inlet of the box passes by the inner wall of the box, and is reflected to the light inlet of the light pillar.

Reflection of the inner wall of the box enables more optical signals to enter the light pillar, improving accuracy of signal processing.

According to a third aspect, a detection apparatus is provided, including: a signal transmitting apparatus, the signal receiving apparatus described in the first aspect and any possible implementation, or the second aspect and any possible implementation, and a signal processing module connected to the signal receiving apparatus, where the signal processing module may be configured to: select a target echo electrical signal based on signal strength of an echo electrical signal in the first receiving branch and/or the second receiving branch; and determine a feature of a target object based on the target echo electrical signal.

In the third aspect, the signal processing module selects the target echo electrical signal from a plurality of branches of echo electrical signals for signal processing, so that signal processing accuracy can be improved.

In a possible implementation, when selecting a target echo electrical signal based on signal strength of each branch of echo electrical signal in the first receiving branch and/or the second receiving branch, the signal processing module is specifically configured to: selecting the target echo electrical signal based on a priority of a first-level echo electrical signal, a priority of a second-level echo electrical signal, and a priority of a third-level echo electrical signal, where signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold; and the priority of the second-level echo electrical signal is higher than the priority of the third-level echo electrical signal, and the priority of the third-level echo electrical signal is higher than the priority of the first-level echo electrical signal.

Echo electrical signals are classified into three priorities by setting two strength thresholds, and the target echo electrical signal is selected based on different priorities, so that accuracy of signal processing can be improved.

In a possible implementation, when determining the feature of the target object based on the target echo electrical signal, the signal processing module is specifically configured to: determine a first integral area of the target echo electrical signal; determine, based on distance correction values corresponding to different integral areas, a first distance correction value corresponding to the first integral area; and correct, based on the first distance correction value, a distance that is of the target object and that is determined based on the target echo electrical signal.

The corresponding first distance correction value is determined based on the first integral area of the target echo electrical signal, and the determined distance of the target object may be more accurate by correcting the distance.

In a possible implementation, when determining the feature of the target object based on the target echo electrical signal, the signal processing module is specifically configured to: determine a first integral area of the target echo electrical signal; determine, based on signal strength peaks corresponding to different integral areas, a first strength peak corresponding to the first integral area; and determine a reflectivity of the target object based on the first strength peak.

The corresponding first strength peak is determined based on the first integral area of the target echo electrical signal. In this manner, the strength peak obtained is more accurate, and the determined reflectivity of the target object is more accurate.

According to a fourth aspect, a signal processing method is provided, where the method is applied to a detection apparatus, and the detection apparatus includes: a signal transmitting apparatus, the signal receiving apparatus described in the first aspect and any possible implementation, or the second aspect and any possible implementation, and a signal processing module connected to the signal receiving apparatus. The method includes: The signal processing module selects a target echo electrical signal based on signal strength of an echo electrical signal in a first receiving branch and/or a second receiving branch, and determines a feature of a target object based on the target echo electrical signal.

In a possible implementation, the selecting a target echo electrical signal based on signal strength of each branch of echo electrical signal in a first receiving branch and/or a second receiving branch may be selecting the target echo electrical signal based on a priority of a first-level echo electrical signal, a priority of a second-level echo electrical signal, and a priority of a third-level echo electrical signal. Signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold. The priority of the second-level echo electrical signal is higher than the priority of the third-level echo electrical signal, and the priority of the third-level echo electrical signal is higher than the priority of the first-level echo electrical signal.

In a possible implementation, the determining a feature of a target object based on the target echo electrical signal may be first determining a first integral area of the target echo electrical signal; then determining, based on distance correction values corresponding to different integral areas, a first distance correction value corresponding to the first integral area; and then correcting, based on the first distance correction value, a distance that is of the target object and that is determined based on the target echo electrical signal.

In a possible implementation, the determining a feature of a target object based on the target echo electrical signal may be first determining a first integral area of the target echo electrical signal; then determining, based on signal strength peaks corresponding to different integral areas, a first strength peak corresponding to the first integral area; and then determining a reflectivity of the target object based on the first strength peak.

According to a fifth aspect, a signal processing apparatus is provided, where the apparatus has a function of implementing any one of the fourth aspect and possible implementations of the fourth aspect. The function may be implemented by hardware, or may be implemented by hardware by executing corresponding software. The hardware or software includes one or more functional modules corresponding to the foregoing function.

According to a sixth aspect, a signal processing apparatus is provided, including a processor, where the processor is coupled to a memory, the memory is configured to store a computer program or instructions, and the processor is configured to execute some or all of the computer program or instructions in the memory, and when the some or all of the computer program or instructions are executed, the processor is configured to implement functions in any one of the fourth aspect and possible implementations of the fourth aspect.

In a possible implementation, the apparatus further includes a communication interface, where the communication interface is configured to transmit a signal processed by the processor, or receive a signal input into the processor. The communication interface may perform a sending action or a receiving action in any one of the fourth aspect and the possible implementations of the fourth aspect.

According to a seventh aspect, a computer-readable storage medium is provided, and stores a computer program. When the computer program is executed by a computer, the computer performs the method in any one of the fourth aspect or possible implementations of the fourth aspect.

Alternatively, a computer-readable storage medium is provided, and is configured to store a computer program, where the computer program includes instructions used to implement a function in any one of the fourth aspect and possible implementations of the fourth aspect.

According to an eighth aspect, a computer program product is provided, where the computer program product includes computer program code, and when the computer program code is run on a computer, the computer performs the method in any one of the fourth aspect and possible implementations of the fourth aspect.

According to a ninth aspect, a vehicle is provided. The vehicle includes the signal receiving apparatus according to any one of the first aspect and possible implementations of the first aspect, or includes the signal receiving apparatus according to any one of the second aspect and possible implementations of the second aspect, or includes the detection apparatus according to any one of the third aspect and possible implementations of the third aspect.

For technical effects of the fourth aspect to the ninth aspect, refer to descriptions in the third aspect. Details are not repeated.

**BRIEF DESCRIPTION OF DRAWINGS**

FIG. 1a is a schematic diagram of detection of a lidar according to an embodiment of this application;
FIG. 1b is a schematic diagram of detection of a lidar according to an embodiment of this application;
FIG. 1c is a schematic diagram of signal saturation distortion according to an embodiment of this application;
FIG. 2 is a schematic diagram of a structure of a detection apparatus according to an embodiment of this application;
FIG. 3a is a schematic diagram of a structure of a signal coupling apparatus according to an embodiment of this application;
FIG. 3b is a schematic diagram of a structure of a signal coupling apparatus according to an embodiment of this application;
FIG. 3c is a schematic diagram of a structure of a signal coupling apparatus according to an embodiment of this application;
FIG. 3d is a schematic diagram of a structure of a signal coupling apparatus according to an embodiment of this application;
FIG. 3e is a schematic diagram of an echo electrical signal according to an embodiment of this application;
FIG. 4a is a schematic diagram of a structure of a light guiding apparatus according to an embodiment of this application;
FIG. 4b is a schematic diagram of a structure of a light guiding apparatus according to an embodiment of this application;
FIG. 5a is a schematic diagram of a structure of a detection apparatus according to an embodiment of this application;
FIG. 5b is a schematic diagram of a structure of a detection apparatus according to an embodiment of this application; and
FIG. 6 is a schematic diagram of an integral area of an echo optical signal according to an embodiment of this application.

**DESCRIPTION OF EMBODIMENTS**

It should be first noted that, a schematic diagram of transmission of an optical signal in the accompanying drawings in this application may be considered as a schematic diagram of a transmission direction of the optical signal. During actual application, a transmission path of the optical signal is complex. The schematic diagram of transmission of the optical signal in the accompanying drawings is merely an example, and should not constitute a limitation on an actual transmission path of the optical signal.

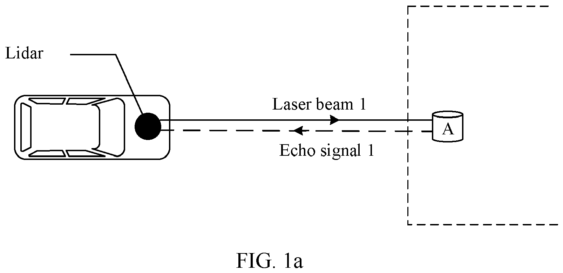

A lidar is a radar system that detects information (parameters such as a target distance, an azimuth, a height, a velocity, an attitude, a reflectivity, and even a shape) about a target object by transmitting a laser beam. A working principle of the lidar is transmitting a sounding signal (for example, a laser pulse) to the target object, and then comparing a received signal (which may also be referred to as a target echo) reflected from the target object with the transmitted sounding signal, to obtain related information of the target object. For example, a distance of the target object is determined based on a time difference between transmitting the sounding signal and receiving the echo and a light velocity. FIG. 1a is a schematic diagram of detection of a lidar according to this application. The lidar emits a laser beam in a specific direction. If a target object exists within a specific distance in the direction of emitting the laser beam, the laser beam may be reflected by a surface of the target object. In FIG. 1a, an example in which a target object A exists in a transmission direction of a laser beam 1 is used. After the laser beam 1 transmitted by a laser reaches the target object A, the laser beam 1 is reflected by a surface of the target object A, and a reflected signal is returned to the lidar as an echo signal. The lidar may determine, based on the echo signal and a sounding signal, information related to the target object A, for example, location information of the target object A.

The lidar may be used in a scenario requiring high accuracy, such as a vehicle-mounted lidar (for example, a scanning vehicle-mounted FMCW lidar) or an airborne lidar. In addition, the lidar can be installed on a mobile platform, for example, a satellite. The lidar may be further applied to an autonomous driving scenario, or may be applied to a connected vehicle, a robot, an unmanned aerial vehicle, security surveillance, or an Internet of Vehicles scenario, for example, a vehicle to everything (vehicle to everything, V2X) scenario, a long term evolution-vehicle (long term evolution-vehicle) LTE-V scenario, or a vehicle-to-vehicle (vehicle-to-vehicle, V2V) scenario. A target object such as an airplane, a vehicle, and a pedestrian is detected, tracked, and identified.

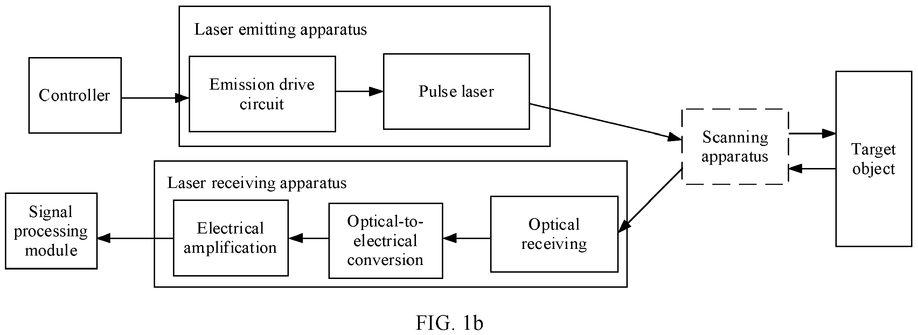

Refer to a flowchart shown in FIG. 1b, during detection, a controller first sends a transmission instruction. After receiving the instruction, a laser emitting apparatus generates a pulse-type current through an emission drive circuit, to drive a pulse laser to emit one or more laser pulses. The laser pulse is adjusted by a scanning apparatus inside the lidar (for example, including a rotating motor and a lens, where the laser may form a beam with a large emission visual field by using the scanning apparatus) and then emitted. Emitted light is reflected by a surface of the target object, and a partially reflected laser pulse returns along an original path, returns to the scanning apparatus after a very short time, and reaches a laser receiving apparatus after being adjusted by the scanning apparatus. The laser receiving apparatus first receives light, and then converts the light into electricity, for example, receives an optical signal by using an avalanche photo diode (avalanche photo diode, APD) photoelectric sensor, and converts the optical signal into an electrical signal (for example, a voltage signal). Optionally, power of a returned laser pulse is extremely low, and the electrical signal may be further amplified. For example, a trans-impedance amplifier (trans-impedance amplifier, TIA) may be used for amplification, and a variable gain amplifier (variable gain amplifier VGA) may also be used for amplification. Optionally, an analog-to-digital converter (analog-to-digital convertor, ADC) may be used to convert an analog electrical signal into a digital signal for output, and the output digital signal is used for digital signal processing. A signal processing module analyzes parameter information of the emitted laser pulse and the received laser pulse, and determines related information of the target object. For example, the signal processing module analyzes a time difference between the emitted laser pulse and the received laser pulse, determines a distance of a target object, and generates a location of a coordinate point of the target object. The laser emitting apparatus and the laser receiving apparatus work at the same time, and continuously receive and emit light beams from different angles, to finally obtain points at all locations on a target surface. Coordinates of the points are combined to form a contour point cloud diagram of an object.

It should be noted that, in FIG. 1b, the controller and the signal processing module may be two independent components to perform emitting and receiving processing respectively, or the controller and the signal processing module may be integrated together to perform emitting and receiving processing. In addition, the scanning apparatus for emitting the laser and the scanning apparatus for receiving the reflected laser may be two independent components, or may be integrated together.

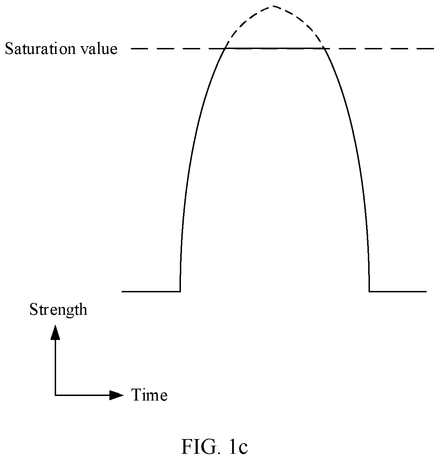

Main performance indexes of the lidar include a detection distance, which determines a range that the lidar can observe. When the target object is very close to the lidar, the echo signal may be saturated and distorted. As a result, short-distance distance measurement is inaccurate and a dead zone is large. As shown in FIG. 1c, a signal strength peak of the echo signal exceeds a saturation value of a detector. When the target object is very far away from the lidar, a signal-to-noise ratio of the echo signal may be very low or even the echo signal cannot be detected, resulting in inaccurate long-distance distance measurement.

In addition, when a reflectivity of the target object is very high, the echo signal may also be saturated and distorted, resulting in inaccurate short-distance distance measurement. When the reflectivity of the target object is very low, the signal-to-noise ratio of the echo signal may be very low or even the echo signal cannot be detected, resulting in inaccurate long-distance distance measurement. The reflectivity may be understood as a ratio of an amount of light (or light intensity or radiant energy) that can be reflected by the surface of the target object to an amount of light (or light intensity or radiant energy) that is emitted to the surface of the target object, and is usually represented by a percentage and a decimal.

With popularization of an automated driving system (automated driving system, ADS) and based on other market demands, a very high requirement is imposed on a dynamic detection range (for example, a range of distance measurement and a range of a measured reflectivity) of the lidar.

Based on this, this application provides a plurality of solutions for improving a dynamic detection range, and the solutions provided in this application can improve accuracy of measuring a reflectivity and a distance of a target object.

The following describes the solutions provided in this application with reference to the accompanying drawings.

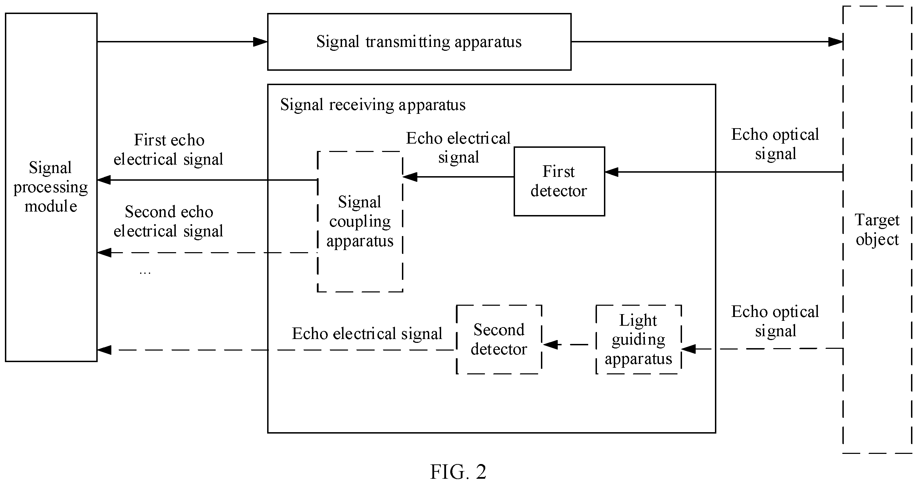

As shown in FIG. 2, a detection apparatus provided in this application is described. The detection apparatus includes a signal transmitting apparatus, a signal receiving apparatus, and a signal processing module connected to the signal receiving apparatus.

Optionally, similar to FIG. 1b, the signal transmitting apparatus may be connected to the signal processing module, or connected to a controller independent of the signal processing module.

The detection apparatus may be a lidar, and the signal receiving apparatus may be a laser receiving apparatus in the lidar.

A conventional signal transmitting apparatus may be used as the signal transmitting apparatus. For example, the signal transmitting apparatus includes a laser. The laser is a light source of the lidar, and may be a semiconductor laser or an optical fiber laser. When the lidar serves as a vehicle-mounted radar, the laser may emit a laser beam with a wavelength of 905 nm, or may emit a laser beam with a wavelength of 940 nm, or may emit a laser beam with a wavelength of 1550 nm. The signal transmitting apparatus is not described in detail in this application.

Optionally, the detection apparatus may further include one or more components such as a scanning apparatus, a transmitting lens, and a receiving lens.

The scanning apparatus includes, for example, a rotating motor and a lens. A laser beam having a large emission field of view may be formed by the scanning apparatus, and a radiation range is large.

The transmitting lens may converge an optical signal, so that the optical signal is irradiated farther. The transmitting lens may be a single lens, or may be a lens group. The lens may be a simple spherical lens or an aspheric lens, for example, a concave lens or a convex lens. A single lens may be a convex lens. The lens group may be a combination of a convex lens and a concave lens, or may be a combination of concave lenses, or a combination of convex lenses. Convex lenses and concave lenses have a plurality of different shapes. For example, convex lenses include a biconvex lens, a planoconvex lens, and a concavo-convex lens, and concave lenses include a biconcave lens, a planoconcave lens, and a concavo-convex lens. Specific shapes of the convex lens and the concave lens are not limited herein.

The receiving lens may be a single lens, or may be a lens group. Any single lens or a combination of lenses that can converge the echo optical signal to the detector as much as possible is applicable to this application.

The following describes the signal receiving apparatus in detail.

As shown in FIG. 2, the signal receiving apparatus includes a first receiving branch, where the first receiving branch includes a first detector, and the first detector is configured to output one branch of echo electrical signal. For example, the first detector is configured to output one branch of echo electrical signal based on the echo optical signal. The echo optical signal is, for example, an optical signal, for example, a laser, reflected from a target object. The branch of echo electrical signal output by the first detector is sent to the signal processing module.

As shown in FIG. 2, optionally, the first receiving branch may further include a signal coupling apparatus, and the signal coupling apparatus is configured to output at least two branches of echo electrical signals based on the branch of echo electrical signal output by the first detector. In the detection apparatus, the at least two branches of echo electrical signals output by the signal coupling apparatus are sent to the signal processing module.

It should be noted that, signal strength of one echo electrical signal in the at least two branches of echo electrical signals output by the signal coupling apparatus is the same as that of the branch of echo electrical signal output by the first detector.

Optionally, signal strength of the remaining branches of echo electrical signals output by the signal coupling apparatus is less than or equal to the signal strength of the branch of echo electrical signal output by the first detector.

As shown in FIG. 2, signal strength of a first branch of echo electrical signal output by the signal coupling apparatus is the same as that of the branch of echo electrical signal output by the first detector. Signal strength of a second branch of echo electrical signal to an $m^{th}$ branch of echo electrical signal output by the signal coupling apparatus may be the same as or different from the signal strength of the branch of echo electrical signal output by the first detector. Herein, m is an integer greater than or equal to 2.

"Signal strength" may be understood as "voltage value". In addition, "signal strength is the same" may be understood as: signal strength is almost the same, and signal strength is the same without considering an error.

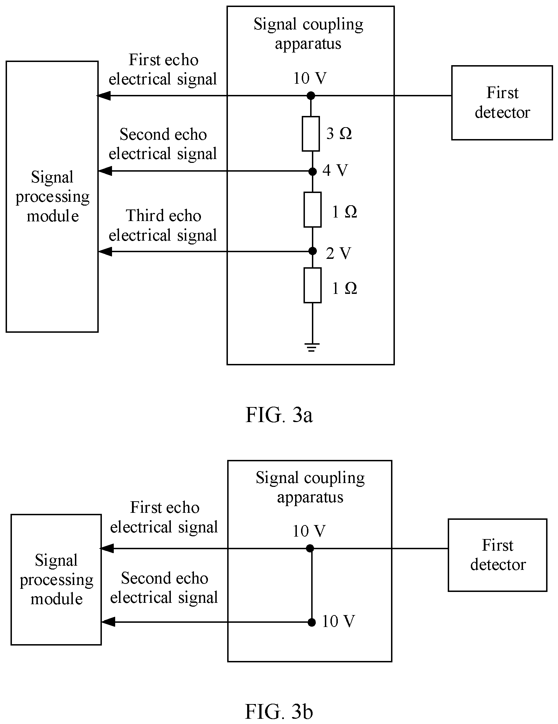

For example, the signal coupling apparatus may be a resistor voltage division apparatus. For example, a signal coupling apparatus shown in FIG. 3a includes at least two series-connected resistors. One end of the series-connected resistors is connected to a first detector, and the other end is connected to the ground. Any two adjacent resistors may output one branch of echo electrical signal to a signal processing module. For example, in FIG. 3a, a voltage value output by the first detector is 10 V, and three resistors are respectively 3 S2, 1 S2, and 1 S2. Therefore, a voltage value of a first branch of echo electrical signal output by the signal coupling apparatus is 10 V, a voltage value of a second branch of echo electrical signal is 4 V, and a voltage value of a third branch of echo electrical signal is 2 V

For another example, as shown in FIG. 3b, the signal coupling apparatus is a "one line divided into two lines", one line is divided into two lines, the two lines separately output one branch of echo electrical signal to the signal processing module, and a voltage value of a first branch of echo electrical signal is the same as that of a second branch of echo electrical signal. For example, the first detector outputs 10 V, and voltage values of two branches of echo electrical signals are both 10 V

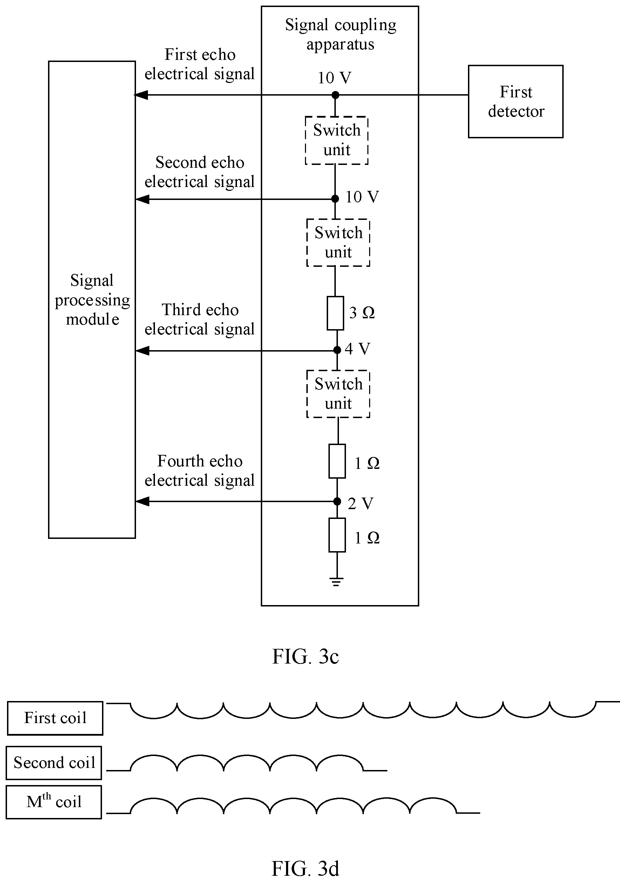

For another example, as shown in FIG. 3c, the signal coupling apparatus may be a combination of FIG. 3a and FIG. 3b. The signal coupling apparatus includes the "one line divided into two lines". One line of the two lines obtained through splitting is connected to the signal processing module, and the other line is connected to one end of a plurality of resistors connected in series. Any two adjacent resistors may output one branch of echo electrical signal to the signal processing module. Voltage values of a first branch of to a fourth branch of echo electrical signals output by the signal coupling apparatus are 10 V, 10 V, 4 V, and 2 V respectively.

Optionally, a switch unit may be further disposed in the signal coupling apparatus. The switch unit may be disposed on a line connected between the signal coupling apparatus and the signal processing module, or may be disposed on a line inside the signal coupling apparatus. Through on and off the switch unit, an appropriate line is selected to output an echo electrical signal. For example, as shown in FIG. 3c, a switch unit is disposed before each resistor of the signal coupling apparatus.

For another example, the signal coupling apparatus may be an inductor voltage division apparatus. For example, the signal coupling apparatus shown in FIG. 3d includes a plurality of coils, and the coils couple a part of a first branch of echo electrical signal to a second branch of echo electrical signal and a part of the first branch of echo electrical signal to an $m^{th}$ branch of echo electrical signal. Quantities of turns of coils corresponding to the second branch of echo electrical signal and the $m^{th}$ branch of echo electrical signal are less than or equal to a quantity of turns of a coil corresponding to the first branch of echo electrical signal. For example, if the quantity of turns of a coil corresponding to the first branch of echo electrical signal is i, and a quantity of turns of a coil corresponding to the second branch of echo electrical signal is i/2 or i/3, signal strength of the second branch of echo electrical signal is 1/2 or 1/3 of signal strength of the first branch of echo electrical signal. A larger quantity of turns of coils of the second branch of echo electrical signal and the $m^{th}$ branch of echo electrical signal indicates stronger coupled signal strength.

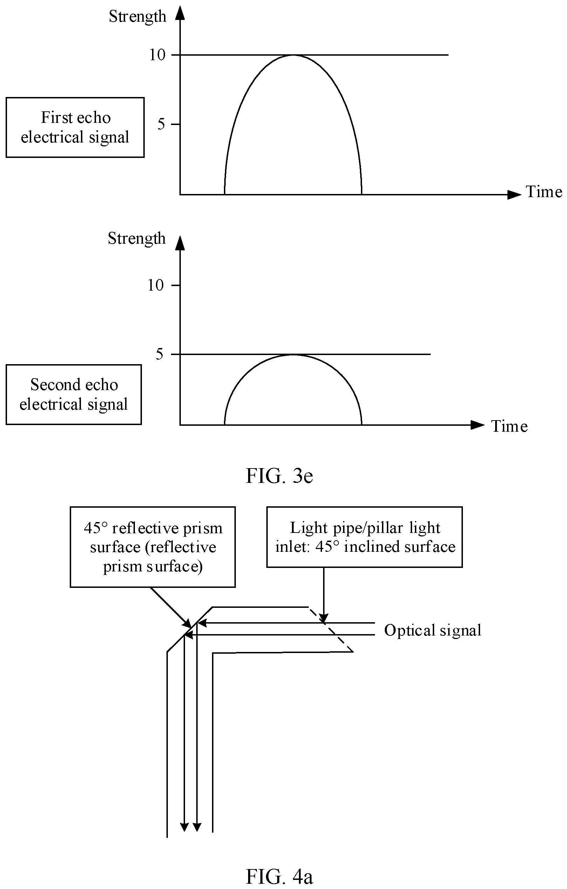

As shown in FIG. 3e, an echo electrical signal may be considered as a pulse waveform, a horizontal coordinate of the pulse waveform is time, and a vertical coordinate of the pulse waveform is strength (or may be a voltage value). A first branch of echo electrical signal output by the signal coupling apparatus is the branch of echo electrical signal output by the first detector, and a second branch of echo electrical signal output by the signal coupling apparatus is 1/2 of signal strength of the first branch of echo electrical signal.

The signal coupling apparatus is disposed to output the at least two branches of echo electrical signals, where signal strength of one echo electrical signal in the at least two branches of echo electrical signals is the same as that of the branch of echo electrical signal output by the first detector, that is, the signal coupling apparatus further adds one branch of or more branches of other echo electrical signals without changing the branch of echo electrical signal output by the first detector. In this way, one branch of or more branches of appropriate echo electrical signals may be selected from a plurality of branches of echo electrical signals based on an actual situation to perform signal processing, thereby improving accuracy of signal processing. For example, when a measured target object is close or a reflectivity of the target object is very high, to avoid signal saturation distortion, an echo electrical signal whose signal is not distorted or whose signal strength is low may be selected for signal processing. For another example, when a measured target object is far away or a reflectivity of the target object is very low, to avoid an excessively low signal-to-noise ratio of the echo signal, an echo electrical signal with high signal strength or a plurality of branches of echo electrical signals (for example, two branches of echo electrical signals whose voltage division coefficient is 1:1) may be selected for superposition, to perform signal processing. Compared with signal processing performed by using only the branch of echo electrical signal output by the first detector, in a case in which same accuracy is ensured, this allows detection of a target object that is farther and closer and has a higher or lower reflectivity, thereby increasing a dynamic detection range.

As shown in FIG. 2, optionally, the signal receiving apparatus may further include at least one second receiving branch, and the second receiving branch includes a light guiding apparatus and a second detector. The light guiding apparatus is configured to input an echo optical signal into the second detector. The second detector is configured to output one branch of echo electrical signal based on the echo optical signal.

The light guiding apparatus is disposed to collect an echo optical signal that is weak compared with an echo optical signal collected by the first detector on a main branch, which avoids signal saturation distortion, so that short-distance measurement or high reflectivity measurement can be more accurate, and a dynamic detection range is further improved.

In an example, a light inlet of the light guiding apparatus is located in a receiving field of view of the first detector.

The light guiding apparatus samples a part of optical signals from echo optical signals on a main optical path where the first detector is located for signal processing. Because signal strength of the sampled part of optical signals is weak, saturation distortion can be avoided, so that short-distance measurement or high reflectivity measurement is more accurate, and a dynamic detection range is further improved.

In another example, the light inlet of the light guiding apparatus is located at a light spot convergence location of an echo optical signal of a target object located at a short distance. The short distance may be understood as being less than or equal to a preset distance.

The following describes several examples of light guiding apparatuses.

In an example, the light guiding apparatus may include a light pillar or a light pipe.

For example, the light pillar is a solid column, and the light pillar may be made of a material such as glass or acrylic resin. The light pillar can alternatively be replaced with optical fibers.

For example, the light pipe is a hollow tube, and an inner wall of the light pipe may transmit an optical signal. For example, the inner wall of the light pipe may be made of a material such as glass or acrylic resin. The light pipe may alternatively be an optical fiber tube.

An optical signal may enter from a light inlet of the light pillar or the light pipe, and the light pillar or the light pipe transmits the optical signal to the second detector. The optical signal is transmitted through a tubular object or a light pillar, so that a loss of the optical signal can be reduced.

Optionally, the light inlet of the light pillar or the light pipe is an inclined surface of a preset angle. For example, the light inlet of the light pillar or the light pipe is an inclined surface of 45°, 60°, 30°, or another degree. For example, total reflection occurs at the preset angle in the light pillar or the light pipe.

Optionally, the light guiding apparatus may further include a box; the light inlet of the light pillar or the light pipe is located in the box; and the box is provided with a light inlet, and an echo optical signal reflected from a target object enters the light inlet of the light pillar or the light pipe through the light inlet on the box. The box is disposed at the light inlet of the light pillar or the light pipe, to prevent a noise optical signal from entering the light pillar or the light pipe, thereby avoiding inaccurate measurement caused by the noise optical signal.

Optionally, a first lens group is disposed on the light inlet of the box, and the first lens group is configured to converge the echo optical signal at the light inlet of the light pillar or the light pipe. The first lens group includes one or more lenses. A lens group is disposed to converge light, so that more optical signals enter a light pipe or a light pillar, thereby improving accuracy of signal processing.

Optionally, an inner wall of the box can reflect an optical signal. In an example, an optical signal entering the light inlet of the box passes through the inner wall of the box, and is reflected to the light inlet of the light pipe or the light pillar. In another example, a part of the optical signal that enters the light inlet of the box directly enters the light inlet of the light pillar or the light pipe directly or through refraction, and a part of the optical signal passes through the inner wall of the box and is reflected to the light inlet of the light pillar or the light pipe. Reflection of the inner wall of the box enables more optical signals to enter the light pipe or the light pillar, improving accuracy of signal processing.

As shown in FIG. 4a, an example of a light guiding apparatus is described. A light inlet of a light pipe or a light pillar is a 45° inclined surface, a 90° corner is disposed on the light pipe or the light pillar, and a reflecting mirror (for example, a 45° reflection prism surface) is disposed at the corner to change a direction of an optical signal.

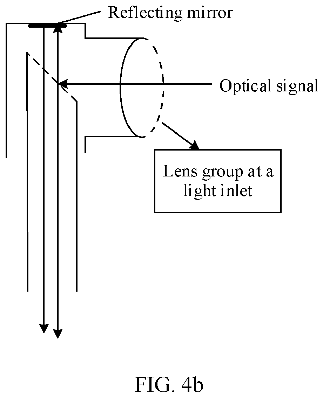

As shown in FIG. 4b, an example of another light guiding apparatus is described. An inlet of a light pipe or a light pillar is a 45° inclined surface, and is surrounded by a box at the inlet of the light pipe or the light pillar. A lens group is disposed at a light inlet of the box, and an echo optical signal is converged at a light inlet of the light pipe or the light pillar. In this way, mutual interference between an optical signal of another branch and an optical signal of the branch can be prevented. Optionally, a reflecting mirror may be disposed on an inner wall of the box. When an echo optical signal entering the box is converged at the inlet of the light pipe or the light pillar, a part of the optical signal is refracted into the light pipe or the light pillar for transmission, and a part of the optical signal is reflected to the reflecting mirror on the inner wall of the box, and then enters the light pillar or the light pipe for transmission after being reflected.

It should be noted that, in FIG. 4a and FIG. 4b, an optical signal transmission example is merely an example, and should not be construed as a limitation on an actual transmission path of the optical signal. For example, when an optical signal enters a light pipe, the optical signal may be refracted, and is refracted to an inner wall of the light pipe, and then totally reflected until reaching a detector.

Optionally, a second lens group may be further disposed at an outlet of the light guiding apparatus, and the second lens group is configured to converge an echo optical signal at a light inlet of the second detector. The second lens group includes one or more lenses.

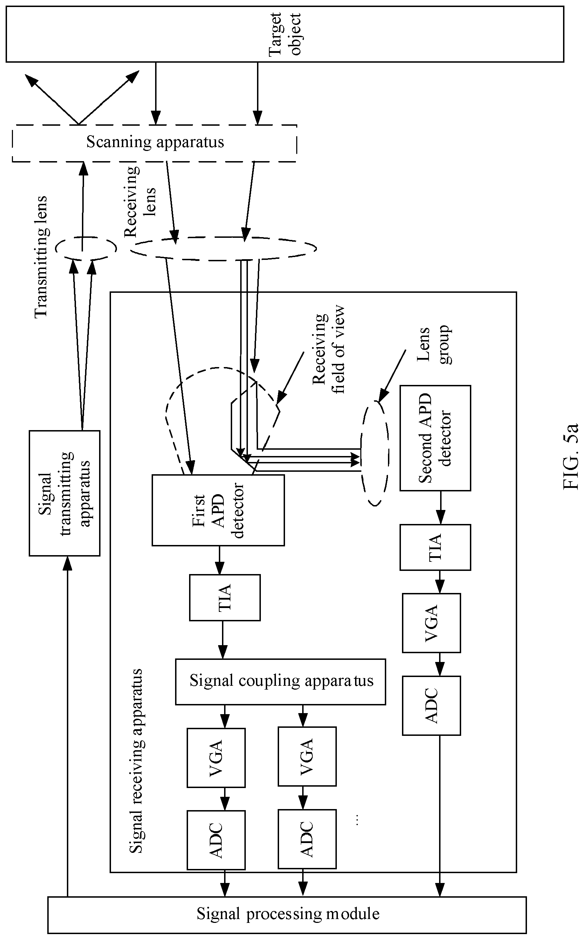

With reference to the light guiding apparatus described above, as shown in FIG. 5a, this application further provides a schematic diagram of a detection apparatus. Similarities with FIG. 2 are not described again. Both the first detector and the second detector are APD detectors. A signal output by the first APD detector is amplified by a TIA and then reaches a signal coupling apparatus, and a signal output by the signal coupling apparatus is amplified by a VGA and undergoes analog-to-digital conversion by an ADC and then reaches a signal processing module. The light guiding apparatus in FIG. 4a is applied to FIG. 5a. A light inlet of the light guiding apparatus is located in a receiving field of view range of the first APD detector. A lens group may be further disposed at an outlet of the light guiding apparatus, and the lens group is configured to converge an echo optical signal at a light inlet of the second APD detector. Optionally, a signal output by the second APD detector is amplified by a TIA and a VGA, and reaches the signal processing module after analog-to-digital conversion by an ADC. Optionally, a scanning apparatus and a transmitting lens may be disposed in the detection apparatus, and a receiving lens may be further disposed. Gains of different VGAs may be different or may be the same.

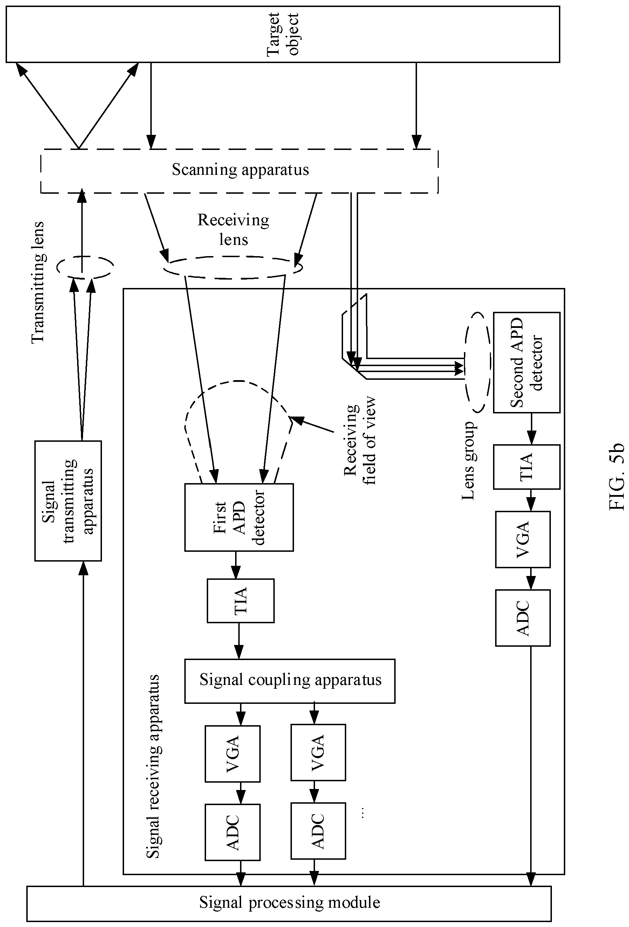

As shown in FIG. 5b, this application further provides a schematic diagram of a detection apparatus. A difference from FIG. 5a lies in a location of a light guiding apparatus. In FIG. 5b, an echo optical signal entering the light guiding apparatus does not pass through a receiving lens. In FIG. 5a, the echo optical signal that enters the light guiding apparatus passes through the receiving lens.

The following describes a signal processing process of a signal processing module with reference to the foregoing detection apparatus (the detection apparatus includes a signal transmitting apparatus, a signal receiving apparatus, and the signal processing module connected to the signal receiving apparatus).

The signal processing module is configured to select a target echo electrical signal based on signal strength of echo electrical signals in a first receiving branch and/or a second receiving branch. In this way, a feature of a target object may be determined based on the target echo electrical signal. The feature herein may be, for example, a distance, an azimuth, a height, a speed, a posture, a reflectivity, or a shape.

The following describes several examples in which the signal processing module selects the target echo electrical signal based on signal strength of each branch of echo electrical signal in the first receiving branch and/or the second receiving branch.

In an example, two strength thresholds may be set: a first strength threshold and a second strength threshold. The first strength threshold is less than the second strength threshold. The first strength threshold indicates measurement precision of a signal measurement system. For example, an echo electrical signal whose signal strength is greater than or equal to the first strength threshold meets preset measurement precision. The second strength threshold indicates a saturation threshold of a detector. Saturation distortion is generated on an echo electrical signal whose signal strength is greater than the second strength threshold.

In addition, a plurality of branches of echo electrical signals are classified into three levels: signal strength of a first-level echo electrical signal is less than or equal to the first strength threshold; signal strength of a second-level echo electrical signal is greater than or equal to the first strength threshold and less than or equal to the second strength threshold; and signal strength of a third-level echo electrical signal is greater than or equal to the second strength threshold. A priority of the second-level echo electrical signal is higher than a priority of the third-level echo electrical signal, and the priority of the third-level echo electrical signal is higher than a priority of the first-level echo electrical signal.

When being configured to select the target echo electrical signal based on the signal strength of each branch of echo electrical signal in the first receiving branch and/or the second receiving branch, the signal processing module may be specifically configured to select the target echo electrical signal based on the priority of the first-level echo electrical signal, the priority of the second-level echo electrical signal, and the priority of the third-level echo electrical signal.

Specifically, when the plurality of branches of echo electrical signals include second-level echo electrical signals (whether a first-level echo electrical signal and/or a third-level echo electrical signal are/is included does not need to be considered), one branch of echo electrical signal with maximum signal strength is selected from the second-level echo electrical signals as the target echo electrical signal.

When the plurality of branches of echo electrical signals include third-level echo electrical signals but do not include a second-level echo electrical signal (whether a first-level echo electrical signal is included does not need to be considered), one branch of echo electrical signal with minimum signal strength is selected from the third-level echo electrical signals as the target echo electrical signal.

When the plurality of branches of echo electrical signals include only first-level echo electrical signals, and do not include a second-level echo electrical signal or a third-level echo electrical signal, one echo electrical signal with maximum signal strength is selected from the first-level echo electrical signals as the target echo electrical signal.

In another example, a strength threshold may be set, for example, may be the first strength threshold described in the foregoing example. The first strength threshold indicates measurement precision of a signal measurement system. For example, an echo electrical signal whose signal strength is greater than or equal to the first strength threshold meets preset measurement precision. A plurality of branches of echo electrical signals are classified into two levels, namely, a first-level echo electrical signal and a fourth-level echo electrical signal, where signal strength of the first-level echo electrical signal is less than or equal to the first strength threshold, and signal strength of the fourth-level echo electrical signal is greater than or equal to the first strength threshold. The fourth-level echo electrical signal may also be considered as a union set (combination) of the second-level echo electrical signal and the third-level echo electrical signal described in the foregoing example. A priority of the fourth-level echo electrical signal is higher than a priority of the first-level echo electrical signal.

When being configured to select the target echo electrical signal based on the signal strength of each branch of echo electrical signal in the first receiving branch and/or the second receiving branch, the signal processing module may be specifically configured to select the target echo electrical signal based on the priority of the first-level echo electrical signal and the priority of the fourth-level echo electrical signal. Specifically, when the plurality of branches of echo electrical signals include only first-level echo electrical signals, and do not include a fourth-level echo electrical signal, one branch of echo electrical signal with maximum signal strength is selected from the first-level echo electrical signals as the target echo electrical signal.

When the plurality of branches of echo electrical signals include only fourth-level echo electrical signals, and do not include a first-level echo electrical signal, one branch of echo electrical signal with minimum signal strength is selected from the fourth-level echo electrical signals as the target echo electrical signal.

When the plurality of branches of echo electrical signals include the first-level echo electrical signal and the fourth-level echo electrical signal, one branch of echo electrical signal with minimum signal strength is selected from the fourth-level echo electrical signal as the target echo electrical signal.

For example, signal strength of a first branch of echo electrical signal and a second branch of echo electrical signal that are output by the first receiving branch is greater than the first strength threshold, and signal strength of one branch of echo electrical signal that is output by the second receiving branch is less than the first strength threshold. The second branch of echo electrical signal with relatively low signal strength is selected from the first branch of echo electrical signal and the second branch of echo electrical signal as the target echo electrical signal.

For another example, signal strength of a first branch of echo electrical signal that is output by the first receiving branch is greater than the first strength threshold, and signal strength of a second branch of echo electrical signal that is output by the first receiving branch and signal strength of an echo electrical signal that is output by the second receiving branch is less than the first strength threshold, the first branch of echo electrical signal is used as the target echo electrical signal.

The target echo electrical signal selected by the signal processing module may be one echo electrical signal, or may be two branches of or more branches of echo electrical signals. The foregoing examples are described by using an example in which one branch of target echo electrical signal is selected. When a plurality of branches of echo electrical signals are selected as the target echo electrical signal, a principle is the same, and details are not described again.

When the selected target echo electrical signal is a plurality of branches of echo electrical signals, an average value or a weighted average value of the plurality of branches of echo electrical signals may be used as a final target echo electrical signal for signal processing. By performing superposition and averaging or weighted averaging on the plurality of branches of echo electrical signals (weights of the branches of echo electrical signals are different), noise can be avoided, and measurement accuracy can be improved. In addition, because a longer measurement distance indicates poorer measurement accuracy, measurement accuracy is improved through superposition and averaging or weighted averaging, that is, on a premise of ensuring measurement accuracy, a measurement distance is increased, thereby increasing a dynamic detection range.

After the target echo electrical signal is determined, the feature of the target object may be determined based on the target echo electrical signal. In consideration of signal saturation distortion, in this application, when the feature of the target object is determined, an integral area of the target echo electrical signal is first calculated, and an eigenvalue is corrected based on the integral area, to improve accuracy of the determined feature of the target object.

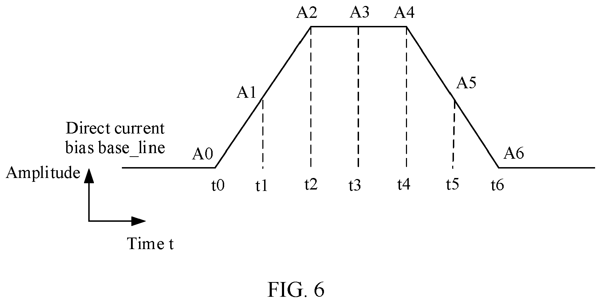

When signal dynamic is insufficient, as shown in FIG. 6, an example of determining an integral area is provided. In this example, saturation distortion occurs in an echo electrical signal, and a saturation threshold is A2, where A2, A3, and A4 are the same. It is assumed that a direct current bias value of the signal is base_line, where base_line, A0, and A6 are the same. A sampling interval is $\Delta T$ (for example, a sampling interval of an ADC), that is, an interval between t0, t1, t2, t3, t4, t5 and t6 is $\Delta T$.

Integral area S=

[0.5*(A1–A0)+(A1–base_line)+0.5*(A2–A1)+(A2–base_line)*2+(A5–base_line)+0.5*(A4–A5)+0.5*(A5–A6) ]*ΔT.

Alternatively, the integral area S= 0.5*(A1-A0)+(A1-base_line)+0.5*(A2-A1)+(A2-base_line)*2+(A5-base_line)+0.5*(A4-A5)+0.5*(A5-A6). *ΔT is not required.

Alternatively, the integral area S=[(A0+A1+A2+A3+A4+A5+A6)-7*base_line]* ΔT.

Alternatively, the integral area S=(A0+A1+A2+A3+A4+A5+A6)-7*base_line. *ΔT is not required.

The integral area may be an integral area between appearance of the echo electrical signal and disappearance of the echo electrical signal, or may be an integral area obtained when strength of the echo electrical signal is greater than or equal to a specified strength threshold (for example, A0).

The following uses an example in which the signal processing module determines a distance of the target object based on the target echo electrical signal for description.

In an example, first, the signal processing module determines a first integral area of the target echo electrical signal; then determines, based on distance correction values corresponding to different integral areas, a first distance correction value corresponding to the first integral area; and then corrects a distance that is of the target object and that is determined based on the target echo electrical signal, to obtain a corrected distance of the target object.

The distance that is of the target object and that is determined based on the target echo electrical signal is a distance determined based on an echo electrical signal in the conventional technology. A specific process is not described in detail.

An integral area of the echo electrical signal may reflect signal strength of the echo electrical signal. When the echo electrical signal is saturated, a higher saturation degree indicates a larger integral area of the echo electrical signal, and a larger error between the signal strength and the distance. A correspondence table or a fitting curve between a distance correction value and an integral area may be made based on the signal integral area.

When distance correction values corresponding to different integral areas are determined, for example, a target board may be placed in front of a detection apparatus, a ranging result d_meas of a system is recorded, and an integral area is calculated as S1. If a distance from the system to the target board measured by a total station is d_true, a correspondence between the integral area S1 and the distance correction value d_meas-d_true may be obtained. A distance of the target board is changed, and optionally, a reflectivity of the target board may be further changed, to obtain a plurality of groups of integral areas and distance correction values. A plurality of groups of data are fitted by using a least square method, and a fitting curve of the integral area and the distance correction value may be obtained.

The following uses an example in which the signal processing module determines emissivity of the target object based on the target echo electrical signal for detailed description.

In an example a, the signal processing module first determines a first integral area of the target echo electrical signal; then determines, based on signal strength peaks corresponding to different integral areas, a first strength peak corresponding to the first integral area; and then determines the reflectivity of the target object based on the first strength peak.

In an example b, the signal processing module first determines a first integral area of the target echo electrical signal; then determines, based on the first integral area and signal strength peak correction values corresponding to different integral areas, a first strength peak correction value corresponding to the first integral area; and then corrects, based on the first strength peak correction value, a signal strength peak that is of the target object and that is determined based on the target echo electrical signal; and determines the reflectivity of the target object based on a corrected signal strength peak.

In the foregoing example a and example b, when the signal processing module determines the reflectivity of the target object based on the first strength peak or the corrected signal strength peak, the first strength peak or the corrected signal strength peak may be substituted into a radar formula to calculate the reflectivity of the target object, or the reflectivity of the target object may be obtained after the first strength peak or the corrected signal strength peak is increased or decreased by a specific proportion.

For example, the radar formula is:

$$P_r = \frac{\tau_a^2 \eta \rho_T P_T A_r cos\theta}{\pi R^2},$$

where

$P_r$ is a receive power of a detector, and is in direct proportion to a signal strength peak, for example, $P_r$ = k * strength peak, where k is a value greater than 0. $\tau_a$ is a one-way transmittance of a laser in the atmosphere. $\theta$ is an included angle between an optical axis of an emission optical system of a transmitter and a target normal direction. $P_T$ is a transmit power of the laser (a signal transmitting apparatus). $\rho_T$ is a reflectivity of the target object. $A_r$ is a receiving area of the detector. $\eta$ is total efficiency of an emitting and receiving optical system (namely, the detection apparatus in this application), for example, emitting efficiency is 0.8, receiving efficiency is 0.7, and the total efficiency is 0.56. R is a distance from the target object to the detection apparatus.

In an example c, the signal processing module first determines a first integral area of the target echo electrical signal and a first distance of the target object; and then determines a reflectivity of the target object based on different integral areas and reflectivities corresponding to different distances, and based on the first integral area and the first distance.

The first distance of the target object may be an uncorrected distance that is of the target object and that is determined based on the target echo electrical signal. Correspondingly, the distances in the different integral areas and reflectivities corresponding to different distances are also uncorrected distances. Alternatively, the first distance of the target object may be a corrected distance that is of the target object and that is obtained after a distance that is of the target object and that is determined based on the target echo electrical signal is corrected based on a distance correction value. Correspondingly, the distances in the different integral areas and reflectivities corresponding to different distances are also corrected distances.

The following describes a signal processing method, applied to a detection apparatus. The detection apparatus includes a signal transmitting apparatus and the signal receiving apparatus described above. The method includes: selecting a target echo electrical signal based on signal strength of an echo electrical signal in a first receiving branch and/or a second receiving branch; and determining a feature of a target object based on the target echo electrical signal.

In an example, the selecting a target echo electrical signal based on signal strength of each branch of echo electrical signal in a first receiving branch and/or a second receiving branch includes selecting the target echo electrical signal based on a priority of a first-level echo electrical signal, a priority of a second-level echo electrical signal, and a priority of a third-level echo electrical signal.

Signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold.

The priority of the second-level echo electrical signal is higher than the priority of the third-level echo electrical signal, and the priority of the third-level echo electrical signal is higher than the priority of the first-level echo electrical signal.

In an example, the determining a feature of a target object based on the target echo electrical signal includes: determining a first integral area of the target echo electrical signal; determining, based on distance correction values corresponding to different integral areas, a first distance correction value corresponding to the first integral area; and correcting, based on the first distance correction value, a distance that is of the target object and that is determined based on the target echo electrical signal.

In an example, the determining a feature of a target object based on the target echo electrical signal includes: determining a first integral area of the target echo electrical signal; determining, based on signal strength peaks corresponding to different integral areas, a first strength peak corresponding to the first integral area; and determining a reflectivity of the target object based on the first strength peak.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated.

The signal processing apparatus provided in this application includes a processor. The processor is coupled to a memory, and the memory is configured to store a computer program or instructions. The processor is configured to execute some or all of the computer program or instructions in the memory, and when the some or all of the computer program or instructions are executed, the processor is configured to implement the signal processing method described above. Optionally, the apparatus further includes a communication interface, where the communication interface is configured to transmit a signal processed by the processor, or receive a signal input into the processor. The communication interface may perform a sending action or a receiving action in any one of the fourth aspect and the possible implementations of the fourth aspect.

For example, the processor is configured to: select a target echo electrical signal based on signal strength of an echo electrical signal in the first receiving branch and/or the second receiving branch; and determine a feature of a target object based on the target echo electrical signal.

In an example, the processor is specifically configured to select the target echo electrical signal based on a priority of a first-level echo electrical signal, a priority of a second-level echo electrical signal, and a priority of a third-level echo electrical signal, where

signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold.

The priority of the second-level echo electrical signal is higher than the priority of the third-level echo electrical signal, and the priority of the third-level echo electrical signal is higher than the priority of the first-level echo electrical signal.

In an example, the processor is specifically configured to: determine a first integral area of the target echo electrical signal; determine, based on distance correction values corresponding to different integral areas, a first distance correction value corresponding to the first integral area; and correct, based on the first distance correction value, a distance that is of the target object and that is determined based on the target echo electrical signal.

In an example, the processor is specifically configured to: determine a first integral area of the target echo electrical signal; determine, based on signal strength peaks corresponding to different integral areas, a first strength peak corresponding to the first integral area; and determine the reflectivity of the target object based on the first strength peak.

An embodiment of this application further provides a vehicle. The vehicle includes the signal receiving apparatus described above, or includes the detection apparatus described above, for example, includes the receiving apparatus or the detection apparatus in FIG. 2, FIG. 5a, or FIG. 5b.

Embodiments of this application further provide a computer-readable storage medium, storing a computer program. When the computer program is executed by a computer, the computer may perform the signal transmission method. In other words, the computer program includes instructions used to implement the foregoing signal processing method.

Embodiments of this application further provide a computer program product, including computer program code. When the computer program code is run on a computer, the computer is enabled to perform the signal processing method.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may alternatively be any conventional processor or the like.

The memory mentioned in embodiments of this application may be a volatile memory or a nonvolatile memory, or may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It is to be noted that the memory described in this application aims to include but is not limited to these memories and any memory of another proper type.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that in descriptions of this application, terms such as "first" and "second" are merely for purpose of differentiation and description, but should not be understood as indication or implication of relative importance or indication or implication of an order.

Although some preferred embodiments of this application have been described, a person skilled in the art can make changes and modifications to these embodiments once the person skilled in the art learns of a basic creative concept. Therefore, the appended claims are intended to be construed as to cover the preferred embodiments and all changes and modifications falling within the scope of this application.

Clearly, a person skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

**Claims**

1. A signal receiving apparatus, comprising: a first receiving branch, wherein

    the first receiving branch comprises a first detector and a signal coupling apparatus;
    the first detector is configured to output one branch of echo electrical signal; and
    the signal coupling apparatus is configured to output at least two branches of echo electrical signals based on the branch of echo electrical signal output by the first detector, wherein one branch of echo electrical signal in the at least two branches of echo electrical signals has same signal strength as the branch of echo electrical signal output by the first detector.

2. The apparatus according to claim 1, further comprising at least one second receiving branch, wherein

    the second receiving branch comprises a light guiding apparatus and a second detector;
    the light guiding apparatus is configured to input an echo optical signal into the second detector; and
    the second detector is configured to output one branch of echo electrical signal based on the echo optical signal.

3. A signal receiving apparatus, comprising: a first receiving branch and at least one second receiving branch, wherein

    the first receiving branch comprises a first detector; and the first detector is configured to output one branch of echo electrical signal; and
    the second receiving branch comprises a light guiding apparatus and a second detector; the light guiding apparatus is configured to input an echo optical signal to the second detector; and the second detector is configured to output one branch of echo electrical signal based on the echo optical signal.

4. The apparatus according to claim 3, wherein the first receiving branch further comprises a signal coupling apparatus; and
    the signal coupling apparatus is configured to output at least two branches of echo electrical signals based on the branch of echo electrical signal output by the first detector, wherein one branch of echo electrical signal in the at least two branches of echo electrical signals has same signal strength as the branch of echo electrical signal output by the first detector.

5. The apparatus according to claim 2 or 3, wherein a light inlet of the light guiding apparatus is located in a receiving field of view of the first detector.

6. The apparatus according to any one of claims 2, 3, and 5, wherein the light guiding apparatus comprises a light pillar.

7. The apparatus according to claim 6, wherein a light inlet of the light pillar is a 45° inclined surface.

8. The apparatus according to claim 6 or 7, wherein the light guiding apparatus further comprises a box;
    the light inlet of the light pillar is located in the box; and a light inlet is disposed on the box, and the echo optical signal enters the light inlet of the light pillar through the light inlet of the box.

9. The apparatus according to claim 8, wherein a first lens group is disposed on the light inlet of the box, and the first lens group is configured to converge an echo optical signal at the light inlet of the light pillar.

10. The apparatus according to claim 8 or 9, wherein an inner wall of the box can reflect an optical signal, and the echo optical signal that enters the light inlet of the box passes by the inner wall of the box, and is reflected to the light inlet of the light pillar.

11. A detection apparatus, comprising: a signal transmitting apparatus, the signal receiving apparatus according to any one of claims 1 to 10, and a signal processing module connected to the signal receiving apparatus, wherein
the signal processing module is configured to: select a target echo electrical signal based on signal strength of an echo electrical signal in a first receiving branch and/or a second receiving branch; and determine a feature of a target object based on the target echo electrical signal.

12. The detection apparatus according to claim 11, wherein when selecting the target echo electrical signal based on the signal strength of each branch of echo electrical signal in the first receiving branch and/or the second receiving branch, the signal processing module is specifically configured to:

   select the target echo electrical signal based on a priority of a first-level echo electrical signal, a priority of a second-level echo electrical signal, and a priority of a third-level echo electrical signal, wherein
   signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold; and
   the priority of the second-level echo electrical signal is higher than the priority of the third-level echo electrical signal, and the priority of the third-level echo electrical signal is higher than the priority of the first-level echo electrical signal.

13. The detection apparatus according to claim 11 or 12, wherein when determining the feature of the target object based on the target echo electrical signal, the signal processing module is specifically configured to:

   determine a first integral area of the target echo electrical signal;
   determine, based on distance correction values corresponding to different integral areas, a first distance correction value corresponding to the first integral area; and
   correct, based on the first distance correction value, a distance that is of the target object and that is determined based on the target echo electrical signal.

14. The detection apparatus according to claim 11 or 12, wherein when determining the feature of the target object based on the target echo electrical signal, the signal processing module is specifically configured to:

   determine a first integral area of the target echo electrical signal;
   determine, based on signal strength peaks corresponding to different integral areas, a first strength peak corresponding to the first integral area; and
   determine a reflectivity of the target object based on the first strength peak.

15. A signal processing method, applied to a detection apparatus, wherein the detection apparatus comprises: a signal transmitting apparatus, the signal receiving apparatus according to any one of claims 1 to 10, and a signal processing module, and the method comprises:
selecting, by the signal processing module, a target echo electrical signal based on signal strength of an echo electrical signal in a first receiving branch and/or a second receiving branch, and determining a feature of a target object based on the target echo electrical signal.

16. The method according to claim 15, wherein the selecting a target echo electrical signal based on signal strength of each echo electrical signal in a first receiving branch and/or a second receiving branch comprises:

   selecting the target echo electrical signal based on a priority of a first-level echo electrical signal, a priority of a second-level echo electrical signal, and a priority of a third-level echo electrical signal, wherein
   signal strength of the first-level echo electrical signal is less than or equal to a first strength threshold; signal strength of the second-level echo electrical signal is greater than or equal to the first strength threshold and less than or equal to a second strength threshold; signal strength of the third-level echo electrical signal is greater than or equal to the second strength threshold; and the first strength threshold is less than the second strength threshold; and

the priority of the second-level echo electrical signal is higher than the priority of the third-level echo electrical signal, and the priority of the third-level echo electrical signal is higher than the priority of the first-level echo electrical signal.

17. The method according to claim 15 or 16, wherein the determining a feature of a target object based on the target echo electrical signal comprises:

determining a first integral area of the target echo electrical signal;
determining, based on distance correction values corresponding to different integral areas, a first distance correction value corresponding to the first integral area; and
correcting, based on the first distance correction value, a distance that is of the target object and that is determined based on the target echo electrical signal.

18. The method according to claim 15 or 16, wherein the determining a feature of a target object based on the target echo electrical signal comprises:

determining a first integral area of the target echo electrical signal;
determining, based on signal strength peaks corresponding to different integral areas, a first strength peak corresponding to the first integral area; and
determining a reflectivity of the target object based on the first strength peak.

19. A signal processing apparatus, comprising a processor, wherein

the processor is coupled to a memory, and the memory is configured to store a computer program or instructions; and
the processor is configured to execute some or all of the computer program or instructions in the memory, and when the some or all of the computer program or instructions are executed, the processor is configured to implement the method according to any one of claims 15 to 18.

20. A computer-readable storage medium, wherein the computer-readable storage medium stores a computer program, and when the computer program is executed by a computer, the computer is enabled to perform the method according to any one of claims 15 to 18.

21. A vehicle, wherein the vehicle comprises the receiving apparatus according to any one of claims 1 to 10, or comprises the detection apparatus according to any one of claims 11 to 14.

Lidar

Laser beam 1

A

Echo signal 1

FIG. 1a

Laser emitting apparatus

```
┌──────────┐        ┌──────────────┐        ┌──────────────┐
│Controller│ ─────▶ │Emission drive│ ─────▶ │  Pulse laser │
└──────────┘        │   circuit    │        └──────────────┘
                    └──────────────┘
```

Laser receiving apparatus

```
┌──────────┐   ┌─────────────┐   ┌──────────────┐   ┌──────────┐
│  Signal  │◀──│  Electrical │◀──│ Optical-to-  │◀──│ Optical  │
│processing│   │amplification│   │  electrical  │   │receiving │
│  module  │   └─────────────┘   │  conversion  │   └──────────┘
└──────────┘                     └──────────────┘
```

Scanning apparatus

Target object

FIG. 1b

FIG. 1c

FIG. 2

FIG. 3a

FIG. 3b

Signal coupling
apparatus

First echo
electrical signal

10 V

First
detector

Switch
unit

Second echo
electrical signal

10 V

Switch
unit

Signal
processing
module

Third echo
electrical signal

3 Ω

4 V

Switch
unit

Fourth echo
electrical signal

1 Ω

2 V

1 Ω

FIG. 3c

First coil

Second coil

M$^{th}$ coil

FIG. 3d

Strength

10

5

First echo
electrical signal

Time

Strength

10

5

Second echo
electrical signal

Time

FIG. 3e

45° reflective prism
surface (reflective
prism surface)

Light pipe/pillar light
inlet: 45° inclined surface

Optical signal

FIG. 4a

Reflecting mirror

Optical signal

Lens group at a light inlet

FIG. 4b

FIG. 5a

EP 4 310 536 A1

FIG. 5b

EP 4 310 536 A1

FIG. 6

## INTERNATIONAL SEARCH REPORT

| International application No. |
|---|
| **PCT/CN2022/080930** |

**A. CLASSIFICATION OF SUBJECT MATTER**

G01S 7/48(2006.01)i; G01S 17/931(2020.01)i; G01S 17/42(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 华为, 激光雷达, 距离, 接收, 回波, 动态, 范围, 积分, 面积, 修正, 反射率, lidar, radar, laser, receiver, dynamic, range

**C. DOCUMENTS CONSIDERED TO BE RELEVANT**

| Category* | Citation of document, with indication, where appropriate, of the relevant passages | Relevant to claim No. |
|---|---|---|
| X | US 2015285900 A1 (VAYYAR IMAGING LTD.) 08 October 2015 (2015-10-08) description, paragraphs [0001]-[0054], and figures 1-4B | 1, 11-21 |
| X | CN 111123239 A (SUTENG INNOVATION TECHNOLOGY CO., LTD.) 08 May 2020 (2020-05-08) description, paragraphs [0001]-[0051], and figures 1-6 | 3, 5-21 |
| Y | US 2015285900 A1 (VAYYAR IMAGING LTD.) 08 October 2015 (2015-10-08) description, paragraphs [0001]-[0054], and figures 1-4B | 2, 4-21 |
| Y | CN 111123239 A (SUTENG INNOVATION TECHNOLOGY CO., LTD.) 08 May 2020 (2020-05-08) description, paragraphs [0001]-[0051], and figures 1-6 | 2, 4-21 |
| A | CN 108802711 A (LEISHEN INTELLIGENT SYSTEM CO., LTD.) 13 November 2018 (2018-11-13) entire document | 1-21 |
| A | CN 111273260 A (DANYANG FANXI PHOTOELECTRIC TECHNOLOGY CO., LTD.) 12 June 2020 (2020-06-12) entire document | 1-21 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 May 2022** | **27 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2022/080930**</td></tr>
</table>

| Patent document cited in search report | Publication date (day/month/year) | Patent family member(s) | Publication date (day/month/year) |
|---|---|---|---|
| US 2015285900 A1 | 08 October 2015 | US 10042039 B2 | 07 August 2018 |
| CN 111123239 A | 08 May 2020 | None | |
| CN 108802711 A | 13 November 2018 | CN 108802711 B | 17 August 2021 |
| CN 111273260 A | 12 June 2020 | None | |

Form PCT/ISA/210 (patent family annex) (January 2015)

**REFERENCES CITED IN THE DESCRIPTION**

**Patent documents cited in the description**

- CN 202110315559